## Europäisches Patentamt
## European Patent Office
## Office européen des brevets

(11) Numéro de publication: **0 210 887**
**B1**

(12) **FASCICULE DE BREVET EUROPEEN**

(45) Date de publication du fascicule du brevet:
14.06.89

(21) Numéro de dépôt: **86401379.2**

(22) Date de dépôt: **23.06.86**

(51) Int. Cl.⁴: **A 23 C 3/037, A 23 L 3/22**

(54) Perfectionnements apportés aux installations destinées au traitement thermique, à haute température, en vue de leur assurer une longue conservation, de liquides alimentaires tels que le lait.

(30) Priorité: **11.07.85 FR 8510658**

(43) Date de publication de la demande:
**04.02.87 Bulletin 87/6**

(45) Mention de la délivrance du brevet:
**14.06.89 Bulletin 89/24**

(84) Etats contractants désignés:
**BE CH DE GB IT LI LU NL SE**

(56) Documents cités:
**GB-A- 1 233 196**
**US-A- 3 297 448**
**US-A- 4 161 909**
**US-A- 4 375 185**

**FOOD SCIENCE & TECHNOLOGY ABSTRACTS, no. 75-05-P1024(75025960); R. SELITZER: "Ultra pasteurization tested at Maryland U"**

(73) Titulaire: **LAITERIE DE SAINT-DENIS DE L'HOTEL, Société dite, 40, Grande Rue B.P. 10, F-45550 Saint-Denis de l'Hôtel (FR)**

(72) Inventeur: **Vasseneix, André, Route de Fay aux Loges, F-45550 Saint-Denis de l'Hôtel (FR)**

(74) Mandataire: **Armengaud, Charles, Cabinet ARMENGAUD AINE 3, Avenue Bugeaud, F-75116 Paris (FR)**

ACTORUM AG

## Description

La présente invention concerne des perfectionnements apportés aux installations destinées au traitement thermique à haute température, en vue de leur assurer une longue conservation, de liquides alimentaires.

L'invention est destinée à s'appliquer plus particulièrement, mais non exclusivement, aux installations servant au traitement du lait à «ultra haute température» (UHT) en vue de l'obtention d'un lait de longue conservation.

La pasteurisation de liquides alimentaires, telle que pratiquée dans les appareils à tubes ou à plaques, à une température de 80-85°C pendant 8 à 10 secondes n'altère pas les qualités organoleptiques du liquide, en particulier du lait ainsi traité.

Dans le cas de traitement à «ultra haute température» deux procédés sont utilisés:

— l'un dit «indirect» consiste à chauffer le liquide tel que le lait, par circulation inversée dans des appareils tubulaires ou à plaques, jusqu'à des températures comprises entre 132 et 145°C,

— l'autre dit «direct» consiste en un préchauffage du lait vers 85°C en appareil échangeur à plaques ou à tubes, puis en une injection directe de vapeur dans le lait ou de lait dans la vapeur pour gagner la température de stérilisation comprise entre 132 et 145°C. Le lait sort du stérilisateur par la base de ce dernier, revêtue de «Téflon» (Doc. FSTA n° 75-05-P-1024).

Au cours de ce traitement, le lait subit une altération perceptible au goût assez prononcée dans le cas du procédé «indirect», plus atténuée dans le cas du procédé «direct».

Les recherches entre prises pour déterminer les causes de cette altération ont clairement mis en évidence que le «goût de cuit» provenant des traitements UHT provenait de la formation sur les surfaces des appareils chauffés à haute température d'un film de lait subissant un chauffage prolongé par adhérence aux parois.

Le lait, continuellement injecté dans l'appareil de traitement, prend, par contact avec le film ainsi créé un mauvais goût.

L'invention, qui s'applique aux appareils utilisés dans le procédé direct permet d'éviter au produit tel que le lait de prendre ce «goût de cuit» grâce aux dispositions adoptées qui conduisent à empêcher le liquide, plus particulièrement le lait, de se trouver en contact avec des surfaces portées à haute température et d'y séjourner.

L'invention consiste essentiellement à prévoir, dans l'enceinte où est opérée la stérilisation du liquide, tel que le lait, à haute température, au moins un tube, fait en une matière évitant l'adhérence du liquide sur les parois du tube, tube dans lequel s'écoule naturellement le liquide et qui est chauffé par la vapeur pour amener le liquide à la température voulue.

Grâce aux dispositions adoptées suivant l'invention, il ne se produit plus de dépôt, susceptible d'altérer son goût, du liquide sur les surfaces, tant de l'enceinte de stérilisation que du tube dans lequel ils'écoule.

Les divers caractéristiques et avantages de l'invention ressortiront de la description qui va suivre d'une de ses formes possible de réalisation.

Cette description est faite en référence au dessin annexé sur lequel:

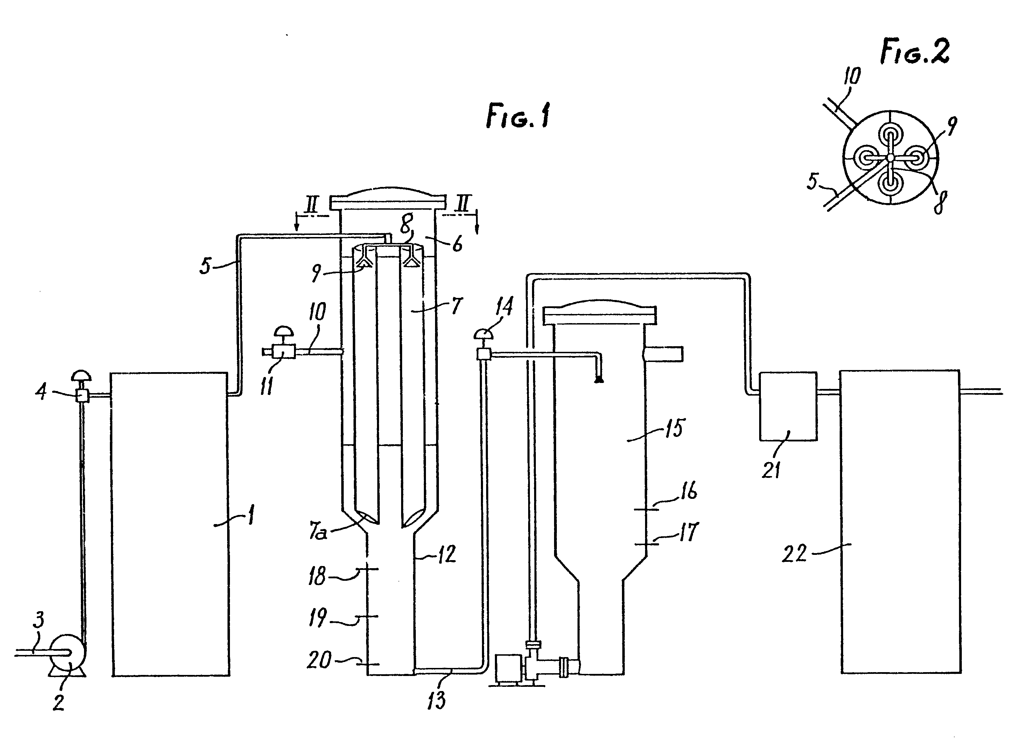

la Fig. 1 est une vue schématique d'ensemble d'une installation perfectionnée suivant l'invention,

la Fig. 2 est une coupe suivant II/II de la Fig. 1.

Comme connu, le liquide tel que du lait, est introduit dans l'échangeur de préchauffage 1 au moyen d'une pompe 2 branchée sur la canalisation 3. Une vanne 4 est prévue à l'entrée de l'échangeur 1.

De l'échangeur, où il est amené à une température comprise entre 80 et 85°C le lait est introduit par une canalisation 5 dans l'enceinte 6 de stérilisation à haute température.

Conformément à l'invention, le lait est introduit dans une pluralité de tubes 7 disposés dans l'enceinte 6 (ces tubes sont au nombre de quatre dans l'exemple traité) au moyen d'un injecteur 8 comportant autant de buses coniques d'injection 9. Les tubes, l'injecteur et ses buses sont en une matière telle qu'il ne puisse y avoir formation d'un débôt du lait sur les parois des tubes, cette matière pouvant avantageusement être constituée par du «TEFLON».

La vapeur est injectée autour des tubes 7 par une canalisation 10 munie d'une vanne 11.

La longueur des tubes 7, dans lesquels le lait s'écoule naturellement est choisie de façon à ce que ces tubes débouchent à proximité de l'orée du tube collecteur 12, duquel par une canalisation 13, munie d'une vanne 14 amenant le lait et la vapeur dans l'enceinte de détente 15.

Conformément à l'invention, l'extrémité inférieure des tubes 7 est biseautée en 7a de façon à permettre au flux du lait s'écoulant dans les tubes de se réunir au centre du collecteur 12 sans en toucher la paroi et à la vapeur qui circule de haut en bas sur les parois de l'enceinte 6 de remonter par thermosiphon à l'intérieur des tubes afin de réchauffer le lait qui coule sans adhérer aux parois des tubes.

La régulation du débit du lait à l'entrée de l'installation est très importante. Elle est déterminée par l'évolution du niveau entre deux sondes 16,17, prévues dans l'enceinte de détente 15. Le débit de la pompe 2 est variable en fonction des niveaux déterminés par les sondes 16, 17, ou bien peut être fixe, mais régulé alors par la vanne 4.

Par ailleurs, il n'est pas sans importance de régler le niveau dans le tube collecteur 12, afin:

— de maintenir un niveau de liquide assurant le chambrage, c'est-à-dire le maintien à la température convenable pour la stérilisation,

— d'empêcher le niveau s'élevant dans le collecteur 12 d'obstruer les tubes 7 à leur base, ce qui empêcherait la circulation de la vapeur.

Cette régulation est obtenue, soit en utilisant soit un détecteur à rayonnement extérieur, soit au moyen de deux sondes 18, 19, commandant l'ouverture de la vanne modulante 14 prévue sur la canalisation 3 reliant l'enceinte 6 à l'enceinte 15 de détente.

Une sonde de température 20 est prévue à la base du collecteur 12 pour disjoncter l'installation toute entière en cas de chute de température de stérilisation.

L'enceinte de détente 15 sous vide est maintenue à une température équilibrée avec injection du lait dans l'enceinte entre 85 et 90°C. Le lait peut ainsi sans dommages entrer en contact avec la paroi de cette enceinte. La partie inférieure du collecteur 12 est avantageusement munie d'une gaine en une matière non adhérente telle que Téflon et ventilée extérieurement.

L'installation est complétée de façon classique par un homogénéiseur 21 et un échangeur 22 amenant le lait à la température voulue pour son conditionnement.

Afin d'obtenir un lait de qualité optimale il est opportun d'éviter tout recyclage de lait. Or, les appareils de conditionnement aseptique nécessitent un excédent d'alimentation. On peut satisfaire cette condition soit par l'utilisation d'un récipient-tampon stérile, soit par modulation du retour contrôlée par automate.

## Revendications

1. Installation destinée au traitement thermique à haute température, en vue d'assurer leur longue conservation, de liquides alimentaires, notamment de lait, dans laquelle le liquide est soumis à un préchauffage avant d'être introduit dans l'enceinte où il est traité à haute température par injection de vapeur, caractérisée en ce que l'enceinte de traitement (6) comporte au moins un tube (7) dans lequel le liquide s'écoule naturellement et qui est chauffé par la vapeur, ce tube étant en une matière, telle que le polytétrafluoréthylène, susceptible d'éviter la formation sur les parois du tube, d'un dépôt, même de faible épaisseur, du liquide traité.

2. Installation suivant la revendication 1, caractérisée en ce que l'enceinte de traitement (6) comporte une pluralité de tubes (7) auxquels le liquide à traiter est amené par un injecteur (8) muni de buses d'injection (9) coniques, injecteur et buses étant en une matière analogue à celle dont sont constitués les tubes (7).

3. Installation suivant l'une quelconque des revendications précédentes, caractérisée en ce que les tubes (7) sont d'une longueur telle qu'ils débouchant à proximité du collecteur (12) prévu à la partie inférieure de l'enceinte (6) par une extrémité biseautée (7a) collectant l'écoulement du liquide vers le centre du collecteur (12).

4. Installation suivant l'une quelconque des revendications précédentes, caractérisée en ce que le débit d'entrée dans l'installation du liquide à traiter est réglé au moyen de sondes (16, 17) prévues dans l'enceinte de détente (15) dans laquelle est amené le liquide après son traitement thermique par la vapeur, sondes reliées à la pompe d'alimentation (2) en liquide de l'installation.

5. Installation suivant l'une quelconque des revendications précédentes, caractérisée en ce que le débit d'entrée du liquide est réglé en agissant sur une vanne (4) disposée sur la canalisation (5) d'amenée du liquide à l'enceinte (6).

6. Installation suivant l'une quelconque des revendications précédentes, caractérisée en ce que le niveau atteint par le liquide dans le collecteur (12) est réglé au moyen de sondes (18,19) reliées à une vanne modulante (14) prévue sur la canalisation (13) reliant l'enceinte de traitement thermique (6) à l'enceinte de détente (15).

7. Installation suivant l'une quelconque des revendications précédentes, caractérisée en ce qu'une sonde de température (20) est prévue à la base du collecteur (12) pour disjoncter l'installation toute entière en cas de chute de la température de stérilisation.

## Patentansprüche

1. Vorrichtung zur thermischen Behandlung von Ernährungsflüssigkeiten, insbesondere Milch, bei hoher Temperatur zur Erhöhung der Haltbarkeit, in der die Flüssigkeit einer Vorerhitzung vor Einführung in den Behälter unterzogen wird, wo sie bei hoher Temperatur mittels Dampfinjektion behandelt wird, dadurch gekennzeichnet, daß der Aufbereitungsbehälter (6) wenigstens ein Rohr (7) aufweist, in dem die Flüssigkeit auf natürliche Weise nach unten strömt und das durch den Dampf erhitzt wird, wobei das Rohr aus einem Material, wie etwa Polytetrafluorethylen gebildet ist, welches die Bildung einer Ablagerung selbst feiner Dicke der behandelten Flüssigkeit auf den Wänden des Rohres vermeidet.

2. Vorrichtung nach Anspruch 1, dadurch gekennzeichnet, daß der Aufbereitungsbehälter (6) eine Anzahl von Rohren(7) aufweist, in die die zu behandelnde Flüssigkeit mittels eines mit konischen Einspritzdüsen (9) ausgestatteten Injektors (8) geleitet wird, wobei sowohl der Injektor als auch die Düsen aus dem selben Material wie die Rohre (7) bestehen.

3. Vorrichtung nach einem der vorhergehenden Ansprüche, dadurch gekennzeichnet, daß die Rohre (7) derart lang sind, daß sie in der Nähe des im unteren Teil des Behälters (6) vorgesehenen Sammlers (12) münden, wobei sie jeweils abgeschrägte Enden (7a) aufweisen, die den Flüssigkeitsstrom zur Mitte des Sammlers (12) hin vereinen.

4. Vorrichtung nach einem der vorhergehenden Ansprüche, dadurch gekennzeichnet, daß die Menge der in die Vorrichtung eingeleiteten zu behandelnden Flüssigkeit mit Hilfe von Sonden (16, 17) reguliert wird, die in dem Endspannungsbehälter (15) vorgesehen sind, in den die Flüssigkeit nach der thermischen Behandlung mit Dampf geleitet wird, wobei die Sonden mit der Speisepumpe (2) der Flüssigkeit der Vorrichtung verbunden sind.

5. Vorrichtung nach einem der vorhergehenden Ansprüche, dadurch gekennzeichnet, daß die Menge der zugeführten Flüssigkeit durch Betätigung eines Ventils (4) reguliert wird, das an der Rohrleitung (5) für die Zufuhr der Flüssigkeit in den Behälter (6) angeordnet ist.

6. Vorrichtung nach einem der vorhergehenden Ansprüche, dadurch gekennzeichnet, daß die Höhe des Flüssigkeitsspiegels in dem Sammler (12) mittels Sonden (18, 19) reguliert wird, die mit einem Modulationsventil (14) verbunden sind, das auf der Rohrleitung (13) vorgesehen ist, die den Behälter zur thermischen Behandlung (6) mit dem Entspannungsbehälter (15) verbindet.

7. Vorrichtung nach einem der vorhergehenden Ansprüche, dadurch gekennzeichnet, daß ein Temperaturfühler (20) am unteren Ende des Sammlers (12) vorgesehen ist, der dazu dient, die gesamte Vorrichtung bei einem Abfall der Sterilisationstemperatur abzuschalten.

## Claims

1. An installation intended for the high-temperature heat-treatment of liquid foodstuffs, in particular milk, with a view to ensuring their lengthy preservation, in which the liquid is subjected to preheating before being introduced into the chamber where it is treated at high temperature by injection of steam, characterized in that the treatment chamber (6) includes at least one tube (7) into which the liquid flows naturally and which is heated by the steam, this tube being of a material such as polytetrafluoroethylene which is capable of avoiding the formation on the walls of the tube of a deposit even of little thickness from the liquid being treated.

2. An installation as in Claim 1, characterized in that the treatment chamber (6) includes a plurality of tubes (7) to which the liquid to be treated is led through an injector (8) equipped with conical injection nozzles (9), the injector and nozzles being of a material similar to that from which the tubes (7) are formed.

3. An installation as in either of the preceding Claims, characterized in that the tubes (7) are of a length such that they open out close to the collector (12) provided at the bottom part of the chamber (6), through bevelled ends (7a) which collect the flow of the liquid towards the centre of the collector (12).

4. An installation as in any one of the preceding Claims, characterized in that the inlet to the installation the delivery of liquid to be treated is regulated by means of probes (16, 17) provided in the expansion chamber (15) into which the liquid is led after its heat treatment by the steam, the probes being connected to the liquid feed pump (2) of the installation.

5. An installation as in any one of the preceding Claims, characterized in that the inlet delivery of liquid is regulated by acting upon a valve (4) placed in the piping (5) leading the liquid to the chamber (6).

6. An installation as in any one of the preceding Claims, characterized in that the level reached by the liquid in the collector (12) is regulated by means of probes (18, 19) connected to a modulator valve (14) provided in the piping (13) connecting the heat-treatment chamber (6) to the expansion chamber (15).

7. An installation as in any one of the preceding Claims, characterized in that a temperature probe (20) is provided at the base of the collector (12) for switching off the installation entirely in the event of a drop in the sterilisation temperature.

Fig.1

Fig.2

EP 0 210 887 B1